# EUROPEAN PATENT APPLICATION

(11) **EP 2 592 588 A1**
(43) Date of publication of application: **15.05.2013**
(21) Application number: 12157604.5
(22) Date of filing: 29.02.2012
(51) Int. Cl.: G06Q 20/20, G06Q 30/02

(54) **Electronic transaction and logistics system**

(30) Priority: 11.11.2011 TW 100141245
(71) Applicant: M-Media Co., Ltd., Taipei City 106 (TW)
(72) Inventor: Chen, Gi Gi, 106 Taipei city (TW)
(74) Representative: Baldwin, Mark

(57) **Abstract**

The present invention is related to an electronic transaction and logistics system, particularly to an electronic transaction and logistics system, which is able to use a variety of cards or tags, free from being misappropriated and skimmed, and is able to facilitate cross-system integration. The system comprises a server, a plurality of shop units and a plurality of characteristic code carriers. The server is provided with a management platform and a member database for storing account information of each member, a corresponding characteristic code, a plurality of points and the attribute of each point. Each shop unit is connected to the server through the network, and provided with a shop platform, a shop database, a counter device, a characteristic code reader and a keyboard. The member can use the shop unit to shop and pay by electronic cash, bonus, and gift coupon, and also to pick-up merchandise, top up value, inquire consumption details, create an account, and change or stop a characteristic code carrier.

## Description

### FIELD OF THE INVENTION

The present invention is relates to an electronic transaction and logistics system, particularly to an electronic transaction and logistics system, which is able to use a variety of cards or tags, free from being misappropriated and skimmed, and is able to facilitate cross-system integration.

### BACKGROUND

An electronic wallet is a means of payment commonly used by the customer in business activities, such as means of payment in small value purchase or purchasing small-value commodity. Nowadays, the electronic transaction system is being built in many countries all over the world for replacing the model of cash transaction.

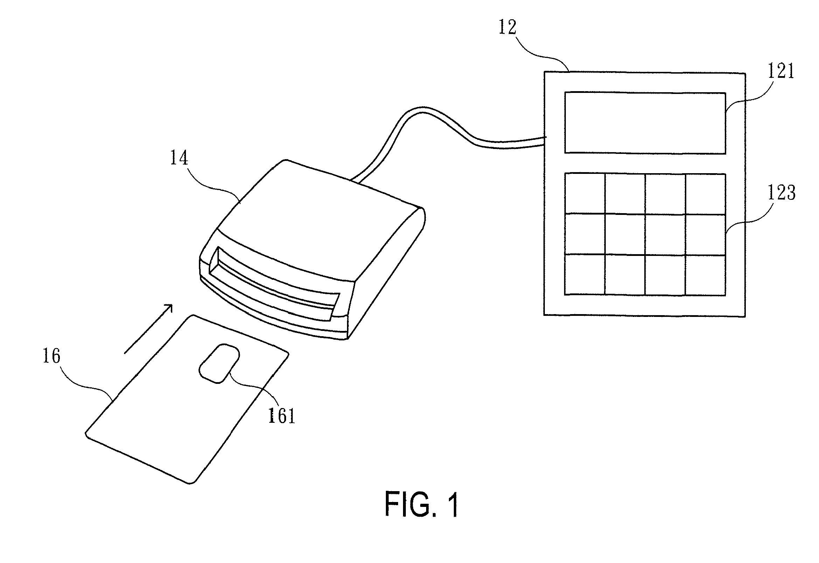

Referring to FIG 1, there is shown a diagram illustrating the condition using a conventional electronic wallet. The electronic wallet is developed from an integrated circuit card (IC card). It is an IC card 16 with value top-up function, i.e., the card is provided therein with an IC 161 for data access. The IC card 16 is stored with a value of cash or other electronic currencies by banks or the user, and can be used for payment at a point of sale (POS) system 12 installed with the same electronic wallet system.

In general, the POS system 12 comprises a display 121, a keyboard 123 and a card reader 14. After the IC card 16 is inserted into the card reader 14, information of electronic cash stored in the IC 161 can be read by the POS system 12. The cashier uses the keyboard 123 to select the function of the POS system 12, such as deduction of amount due to payment, increase in amount of top-up value, consumption inquiry etc. Moreover, the operations are displayed on the display 121 for the review by the user. After confirmation, updated information of electronic cash is then written into the IC 161 of the IC card 16.

In some electronic wallet systems, a radio frequency identification (RFID) card is adopted as a carrier of the electronic cash. In this case, the card is provided with a RFID tag for storing data related to electronic cash. In such a system, an RFID tag reader is used for data access of the RFID tag in the RFID card. The other operations are similar to those of the above-mentioned IC card system.

In the aforementioned electronic wallet system, a plastic card can be used to replace cash transaction for small value commodity or service. But systems adopted by shops are incompatible. For different shops, different cards are needed for electronic wallet transaction. It is not convenient for the user to take along many cards and not environment friendly to produce such amount of cards.

In addition, the cards used in most electronic wallet systems belong to bearer cards, which is equivalent to cash. If the card gets lost, it may be retrieved with little chance. Therefore, there still exists considerable risk for the current electronic wallet system.

Near Field Communication (NFC) technology is introduced by companies. It is necessary for NFC technology to dispose an NFC control chip, an antenna, and a secure element for anti-interference in a smart phone. An application program for controlling system operation and data access is also needed to be installed in the smart phone. In point of the application of electronic wallet, the security of transaction may be enhanced. But the cost of smart phones, used as the carriers necessarily, themselves is too high. Moreover, the tangible and intangible cost due to the increase in elements and the modification of the circuit structure of the smart phone, needed for the operation of the NFC technology, may result in a significant effect on popularity.

### SUMMARY OF THE INVENTION

It is one object of the present invention to provide an electronic transaction and logistics system, which is able to use a variety of cards or tags, free from being misappropriated and skimmed, and is able to facilitate cross-system integration.

It is a further object of the present invention to provide an electronic transaction and logistics system, which comprises a server for storing account information and point information of a member, and a plurality of shop units verifying identities of members via characteristic codes before shopping, toping up and etc. Thereby, the electronic cash and bonus points belonging to the member is ensured.

It is a further object of the present invention to provide an electronic transaction and logistics system, which verifies identities of members by means of characteristic code carriers, and accesses passwords inputted by members on shopping. Thereby, dual verification for the guarantee of electronic transaction may be provided.

It is a further object of the present invention to provide an electronic transaction and logistics system, wherein the shop unit stores feedback points in the corresponding shop account according to a precondition, and the points of corresponding attribute of the corresponding member account in the server is synchronized with the feedback points.

It is a further object of the present invention to provide an electronic transaction and logistics system, wherein the attribute of the feedback point of each shop and the points in the member account is selectively one of gift coupon of shop, cash, bonus, discount coupon, specific pick-up point, and relief fund.

It is a further object of the present invention to provide an electronic transaction and logistics system, wherein the conditions for using the points of each attribute in the server are set on the shop platform of each shop unit.

It is a further object of the present invention to provide an electronic transaction and logistics system, further comprising a plurality of logistics stations, wherein merchandise is picked up according to corresponding specific pick-up points after the characteristic code is read out and the password is inputted.

It is a further object of the present invention to provide an electronic transaction and logistics system, wherein a password may be sent to the member by means of one of short message, e-mail, post, printing, voice and the combination thereof, selectively, by the server and the shop platform after the member account and the shop account are created.

It is a further object of the present invention to provide an electronic transaction and logistics system, wherein the member code is selectively one of a national identity number, a passport number, a phone number, a mobile phone number, an e-mail address, a business registration number, a user assigned account, a specific account and the combination thereof.

It is a further object of the present invention to provide an electronic transaction and logistics system, wherein the member is requested by the server and the shop platform to input and then confirm the password of the account while the member account and the shop account are created.

It is a further object of the present invention to provide an electronic transaction and logistics system, wherein the characteristic code carrier is selectively one of a IC card, a RFID card, a RFID tag, a bar code, a two-dimensional bar code, a quick response (QR) code, a magnetic stripe card and the combination thereof.

It is a further object of the present invention to provide an electronic transaction and logistics system, wherein the characteristic code reader is selectively one of a IC card reader, a RFID tag reader, a bar code reader, a two-dimensional bar code reader, a QR code reader, a magnetic stripe card reader and the combination thereof.

It is a further object of the present invention to provide an electronic transaction and logistics system, wherein the characteristic code carrier is selectively one of an identification card, a health insurance card, an Easycard, an iCash card, a Taiwan Smart Card, an All-in-One Card, a credit card, a debit card, a cash card, a traffic card, an Octopus card and a member card.

It is a further object of the present invention to provide an electronic transaction and logistics system, wherein each member can log in the server through network for account management, consumption inquiry, and changing or stopping the characteristic code carrier.

It is a further object of the present invention to provide an electronic transaction and logistics system, wherein each member is able to conduct payment by logging in each shop platform through network, and pick up merchandise at each logistics station.

The present invention provides an electronic transaction and logistics system, comprising: a server provided with a management platform and a member database, wherein said management platform provides the functions of creation and management of member account, said member database is used for storing account information of each member account, characteristic codes corresponding to each member account, a plurality of points, and the attributes of each point; a plurality of shop units connected to said server through a network, wherein each shop unit is provided with a shop platform, a shop database, a counter device, a characteristic code reader and a keyboard, respectively, wherein said shop platform provides the functions of the creation and management of shop account and the function of bookkeeping calculation thereof, said shop database is used to store payment information corresponding to each shop account, and said counter device is used to operate each function of said shop unit; and a plurality of characteristic code carriers corresponding to each member account, wherein each characteristic code carrier comprises a characteristic code; wherein a member carries the corresponding characteristic code carrier, has the characteristic code to be read by the characteristic code reader of each shop unit, and inputs a password via the keyboard, so as to conduct an activity of one of shopping payment, toping up value, consumption inquiry and the combination thereof, the corresponding points in said member account in said server is updated automatically when said points are changed.

In one embodiment of the present invention, the payment information is sent to the shop platform and stored in a corresponding shop account in said shop database by said counter device when shopping payment is conducted by each member via said shop unit.

In one embodiment of the present invention, when payment information stored in one shop account meets a feedback condition is determined by said shop platform, feedback points are stored in the shop account, and the points of corresponding attribute in the corresponding member account in said server is synchronized with said feedback points.

In one embodiment of the present invention, said feedback point of each shop is selectively one of gift coupon point of shop, cash point, bonus point, discount coupon point and specific pick-up point.

In one embodiment of the present invention, the attribute of the points in the member account is selectively one of gift coupon of each shop, cash, bonus of each shop, discount coupon of each shop, specific pick-up of each shop, or relief fund.

In one embodiment of the present invention, the condition for using the points of each attribute in said server is set by each shop unit on said shop platform.

In one embodiment of the present invention, further comprises a plurality of logistics stations connected to said server through said network, wherein each logistics station comprises a logistics platform, a characteristic code reader and a keyboard, wherein merchandise is picked up in accordance with corresponding specific pick-up points stored in the server after the characteristic code in said characteristic code carrier is read by the characteristic code reader and the password is inputted by the member via said keyboard.

In one embodiment of the present invention, said counter device is a point of sale (POS) system. In one embodiment of the present invention, a user inputs a member code at one counter device, and provides a characteristic code carrier having a characteristic code to be read by the characteristic code reader, in such a way that a member account is created in said server, while a shop account is created in the shop unit.

In one embodiment of the present invention, if a member is determined by a shop platform as a first payment at said shop, a shop account is created in said shop platform according to said member code and characteristic code.

In one embodiment of the present invention, said member code is selectively one of a national identity number, a passport number, a phone number, a mobile phone number, an e-mail address, a business registration number, a user defined account, a specific account, a bar code or the combination thereof.

In one embodiment of the present invention, the passwords of said member account and said shop account are sent to the member by means of one of short message, e-mail, post, printing, sound and the combination thereof selectively by said server and said shop platform, when said member account and said shop account are created.

In one embodiment of the present invention, the member is requested by said server and said shop platform to input and then confirm the passwords of said member account and said shop account via said keyboard, when said member account and said shop account are created respectively.

In one embodiment of the present invention, said characteristic code carrier is selectively one of a IC card, a radio frequency identification (RFID) card, a RFID tag, a bar code, a two-dimensional bar code, a quick response code, a magnetic stripe card or the combination thereof.

In one embodiment of the present invention, said characteristic code reader is selectively one of a IC card reader, a RFID tag reader, a bar code reader, a two-dimensional bar code reader, a quick response code reader, a magnetic stripe card reader or the combination thereof.

In one embodiment of the present invention, said characteristic code carrier is selectively one of an identification card, a health insurance card, an Easycard, an iCash card, a Taiwan Smart Card, an All-in-One Card, a credit card, a debit card, a cash card, a traffic card, an Octopus card or a member card.

In one embodiment of the present invention, each member can log in the server through network for account management, consumption inquiry, and changing or stopping the characteristic code carrier.

In one embodiment of the present invention, each member can change the characteristic code carrier by inputting said member code and password at said counter device.

In one embodiment of the present invention, each member is able to conduct payment by logging in each shop platform through said network, and pick up merchandise at each logistics station in accordance with corresponding specific pick-up points after the characteristic code in said characteristic code carrier is read by said characteristic code reader and the password is inputted via said keyboard.

### BRIEF DESCRIPTION OF DRAWINGS

FIG 1 is a diagram illustrating the condition using a conventional electronic wallet.
Fig. 2 is a diagram illustrating one embodiment of the present invention.

### DETAILED DESCRIPTION

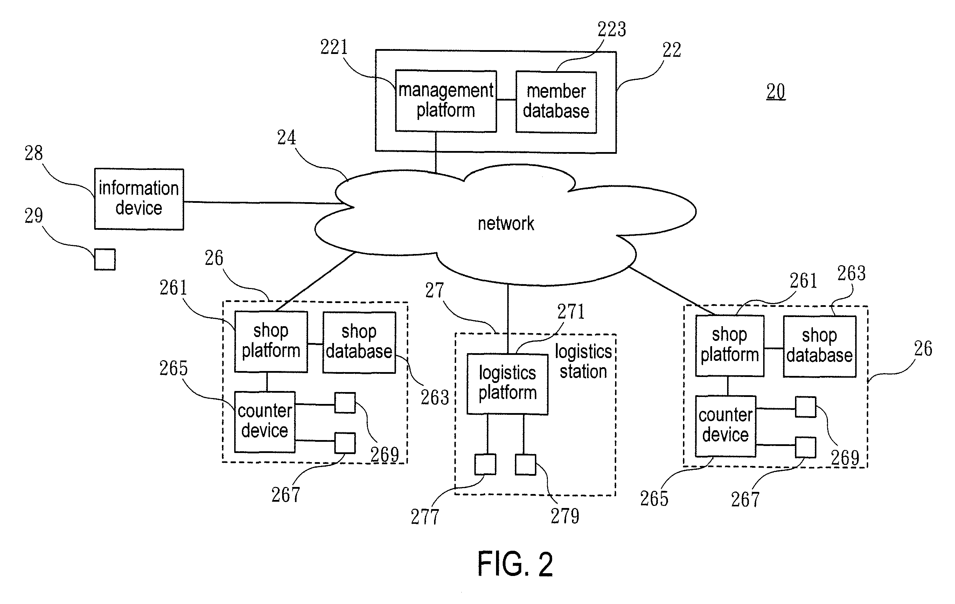

Referring to Fig. 2, there is shown a diagram illustrating an electronic transaction and logistics system in accordance with one embodiment of the present invention. As illustrated in this figure, the electronic transaction and logistics system 20 of the present invention comprises a server 22, a plurality of shop units 26 and a plurality of characteristic code carriers 29.

Since a variety of cards or tags comprises a unique characteristic code, such as an IC card, a radio frequency identification card (RFID card) or other types of RFID tag, a bar code, a two-dimensional bar code, a quick response code (QR code) and a magnetic stripe card, it is possible for the present invention to use cards or tags owned by a user himself as the characteristic code carrier 29. The characteristic code stored in the characteristic code carrier 29 serves as a basis for identifying membership quickly. Naturally, a new characteristic code carrier 29 may be also provided by the system or shop, if it is required by a member.

The server 22 of the present invention is provided with a management platform 221 and a member database 223. The member database 223 is used for storing account information of each member, characteristic codes, a plurality of points and the attribute of each point corresponding to each member account. The management platform 221 provides the functions of account creation and management for member.

Each shop unit 26 comprises a shop platform 261, a shop database 263, a counter device 265, a characteristic code reader 267 and a keyboard 269. Each shop unit 26 is connected to the server 22 through the network 24. The shop platform 261 provides the functions of the creation and management of shop accounts, and the function of bookkeeping and calculation thereof. The shop database 263 is used to store the payment information corresponding to each shop account. The counter device 265 provides the functions for the counter clerk or the member to select and operate, such as shopping payment, top-up value, consumption inquiry, gift coupon payment, bonus exchange, picking up goods etc. When the member goes to the site with the shop unit 26 provided the member provides his own characteristic code carrier 29 firstly, reads the characteristic code via the characteristic code reader 267, and input the password via the keyboard 269, and then the functions provided by the shop unit 26 can be operated.

When a user desires to apply for membership of the electronic transaction and logistics system 20 of the present invention, he/she can make an application at a site where the shop unit 26 is provided. Firstly, an operator or the user selects the function of creation of account on the counter device 265. Subsequently, a member code is input by the operator or the user himself, and then the characteristic code reader 267 is served for reading out a characteristic code of a characteristic code carrier 29 provided by the user. Thereby, a member account is then created in the server 22, while a shop account is created in the shop unit 26.

A password of the account may be sent to the member by means of short message, e-mail, post, printing or voice selectively by the management platform 221 of the server 22 and the shop platform 261 of the shop unit 26 while the member account and the shop account are created. Alternatively, the member is requested to input and then confirm the password via the keyboard 269 at the counter device 265 directly.

A user can also use an information device 28 (for instance, a computer, a notebook, a smart phone, a tablet personal computer, an iPad, a personal digital assistant and etc.) to connect to the server 22 via the network 24. After the function of account creation is selected on the management platform 221, the member code is input to create an account. After the account is created, the server 22 may also send a password of the account to the member by means of short message, e-mail, post, printing or voice. After the above steps are completed, it is required for the member to go to the site where the counter device 265 is provided. The member inputs the member code and the password via the keyboard 269, and provides a characteristic code carrier 29 having a characteristic code to be read by the characteristic code reader 267. After the characteristic code is stored in the member database 223, the procedure of creation of member account is then complete.

After the member account is created, a member can use an information device 28, such as a computer, a notebook, a smart phone, a tablet personal computer, an iPad, a personal digital assistant etc., to connect to the server 22 via the network 24, and then log in the account with a corresponding password. Thereby, activities, such as account management, consumption inquiry, changing or stopping of characteristic code carrier 29 etc., may be conducted.

If payment with the electronic transaction and logistics system 20 is desired by the member after shopping, the operator uses the counter device 265 and selects the function of payment. Subsequently, the member provides the characteristic code carrier 29, and the characteristic code stored in characteristic code carrier 29 is read by the characteristic code reader 267 for membership identification. The transaction is directed to the corresponding member account. After the password is input by the member via the keyboard 269, the cash points are deducted from amount deposited in this member account.

If a shop account for the shop is owned by the member, this payment will be stored in the shop database 263 and correspond to the shop account. If the member has no account for this shop, a shop account for storing payment information of the member is created by the shop platform 261 according to the characteristic code and the member code corresponding to the characteristic code in the server 22. When the shop account is created, a password of this account is either sent to the member via short message, e-mail, post, printing or voice selectively, or input and then confirmed by the member via the keyboard 269 at the counter device 265 directly.

A feedback condition may be set by each shop at the shop platform 261 of the shop unit 26. When payment information stored in one shop account meets the feedback condition, feedback points are then stored in this shop account, and the points of corresponding attribute in the corresponding member account of the server 22 are then synchronized with the feedback points in the shop account.

The feedback point of each shop may be set as gift coupon point of shop, cash point, bonus point, discount coupon point, specific pick-up point etc., according to the feedback condition and promotion program of each shop. The attribute of each point in the member database 223 is set, in cooperation with the program of each shop, as gift coupons of each shop, cash, bonus of each shop, discount coupons of each shop, specific pick-up bonus points and etc.

Each shop can set the conditions for using the points of each attribute in the server 22 on the shop platform 261 of the shop unit 26. For example, shop A accepts its own bonus points to be exchanged for commodity, while shop B may receive the specific pick-up points of shop C to pick up specific merchandise, etc.

In one embodiment of the present invention, the electronic transaction and logistics system 20 further comprises a plurality of logistics stations 27, wherein each logistics station 27 is connected to the server 22 via the network 24. Each logistics station 27 comprises a logistics platform 271, a characteristic code reader 277 and a keyboard 279, respectively. A member can provide the characteristic code carrier 29 having a characteristic code to be read by the characteristic code reader 277, and input the password via the keyboard 279 thereby. The logistics platform 271 will search for the specific pick-up points corresponding to the member account in the member database 223 of the server 22. If the specific pick-up points exist, the corresponding merchandise can be picked up by the member, and the corresponding specific pick-up points in the member database 223 will be then deducted.

In one embodiment, a member can use the information device 28 to connect to and log in the shop platform 261 for online shopping. The purchased merchandise may be stored in the corresponding shop account of the shop database 263 in the form of specific pick-up points, which is synchronized with the points of corresponding attribute in the corresponding member account in the member database 232 of the server 22. After the online shopping is completed, the member can go to the neighboring logistics station 27 to pick up the corresponding goods by means of providing the characteristic code carrier 29 and inputting the password.

If topping up cash value, enquiry of consumption and points of each attribute are required, the member can go to the site where the shop unit 26 is provided, and select the function required on the counter device 265. After reading the characteristic code stored in the characteristic code carrier 29 by the characteristic code reader 267, and inputting the password via the keyboard 269, the operations can be completed.

In case of the characteristic code carrier 29 being broken or lost, the member can go to the site where the shop unit 26 is provided, and select the function of changing characteristic code carrier 29 via the counter device 265. By inputting the member code and the password and then providing a new characteristic code carrier 29, a new characteristic code is read by the characteristic code reader 267, moreover, the process of changing characteristic code carrier is then completed.

In one embodiment of the present invention, each counter device 265 of the shop unit 26 may be integrated into the POS system of the shop for facilitating the integration of payment and bookkeeping of each shop. The records of shopping, top-up value and exchange of points corresponding to each account may be also stored in the member database 223 of the server 22 for the inquiry of the member, shop, service providing unit or related bookkeeper.

In one embodiment of the present invention, the member code used by the member for the creation of member account and shop account is selected from one of a national identity number, a passport number, a phone number, a mobile phone number, an e-mail address, a business registration number, a user defined account, a specific account, a bar code and the combination thereof. For the creation of account, any one of an IC card, an RFID card 27, an RFID tag, a bar code, a two-dimensional bar code, a QR code or a magnetic stripe card owned by the user himself can be used as the characteristic code carrier, such as current identification card, health insurance card, Easycard, iCash card, Taiwan Smart Card, All-in-One Card, credit card, debit card, cash card, traffic card, Octopus card, member card, other types of carriers having characteristic codes therein and etc. A characteristic code carrier may be provided by the system or shop, if no appropriate characteristic code carrier is provided by a user himself. The shop unit 26 and the logistics station 27 of the present invention is provided with a corresponding IC card reader, RFID tag reader, bar code reader, two-dimensional bar code reader, QR code reader, magnetic stripe card reader and etc, thereby the characteristic code of the corresponding characteristic code carrier 29 can be read.

The electronic transaction and logistics system 20 of the present invention may be also applied for the issue of social welfare or relief, such as relief funds, welfare benefits, shopping vouchers, food stamps, vouchers for daily necessities, etc. The relief funds, welfare benefits and shopping vouchers, in the electronic transaction and logistics system 20 of the present invention, can be stored in the member account in the form of cash points if the purpose, shop or the type of commodity is not restricted, while stored in the member account in the form of gift coupon points of each shop if the shop is restricted. The food stamps or vouchers for daily necessities can be stored in the member account in the form of specific pick-up points, and the corresponding article can be exchanged by the member with the characteristic code carrier 29 at the logistics station 27.

By using the electronic transaction and logistics system 20 of the present invention, not only the system integration between shops can be achieved, the effect of energy saving and carbon-reducing can also be improved. In the present invention, each type of points belonging to the member is ensured, and is free from being misappropriated and skimmed. If the characteristic code carrier 29 of the member is lost and then misappropriated after loss reporting procedure is completed, the characteristic code carrier 29 may be displayed as a lost property on the counter device 265 or logistics platform 271 when the characteristic code reader 267 or 277 reads the characteristic code. Thus, illegality may be stopped on the spot, or transferred to the related agency.

The foregoing description is merely one embodiment of the present invention and not considered as restrictive. All equivalent variations and modifications in shape, structure, feature, and spirit in accordance with the appended claims may be made without in any way from the scope of the invention.

## Claims

1. An electronic transaction and logistics system comprising:
a server provided with a management platform and a member database, wherein said management platform provides the functions of creation and management of member account, said member database is used for storing account information of each member account, characteristic codes corresponding to each member account, a plurality of points, and the attributes of each point;
a plurality of shop units connected to said server through a network, wherein each shop unit is provided with a shop platform, a shop database, a counter device, a characteristic code reader and a keyboard, respectively, wherein said shop platform provides the functions of the creation and management of shop account and the function of bookkeeping calculation thereof, said shop database is used to store payment information corresponding to each shop account, and said counter device is used to operate each function of said shop unit; and
a plurality of characteristic code carriers corresponding to each member account, wherein each characteristic code carrier comprises a characteristic code;
wherein a member carries the corresponding characteristic code carrier, has the characteristic code to be read by the characteristic code reader of each shop unit, and inputs a password via the keyboard, so as to conduct an activity of at least one of shopping payment, topping up value, consumption inquiry and the corresponding points in said member account in said server is updated automatically when said points are changed.

2. The electronic transaction and logistics system according to Claim 1, wherein payment information is sent to said shop platform and stored in a corresponding shop account in said shop database by said counter device when shopping payment is conducted by a member via said shop unit.

3. The electronic transaction and logistics system according to Claim 2, wherein when said shop platform determines payment information stored in one shop account meets a feedback condition, feedback points are stored in the shop account, and the points of corresponding attribute in the corresponding member account in said server is synchronized with said feedback points.

4. The electronic transaction and logistics system according to Claim 3, wherein said feedback point of each shop is selectively one of gift coupon point of shop, cash point, bonus point, discount coupon point and specific pick-up point.

5. The electronic transaction and logistics system according to Claim 4, wherein the attribute of the points in the member account is selectively one of gift coupon of each shop, cash, bonus of each shop, discount coupon of each shop, specific pick-up point of each shop, or relief fund.

6. The electronic transaction and logistics system according to Claim 5, wherein the condition for using the points of each attribute in said server is set by each shop unit on said shop platform.

7. The electronic transaction and logistics system according to Claim 5 or 6, further comprising a plurality of logistics stations connected to said server through said network, wherein each logistics station comprises a logistics platform, a characteristic code reader and a keyboard, wherein merchandise is picked up in accordance with corresponding specific pick-up points stored in the server after the characteristic code in said characteristic code carrier is read by the characteristic code reader and the password is inputted by the member via said keyboard.

8. The electronic transaction and logistics system according to any one of the preceding Claims, wherein said counter device is a point of sale (POS) system.

9. The electronic transaction and logistics system according to any one of the preceding Claims, wherein a user inputs a member code at a said counter device, and provides a characteristic code carrier having a characteristic code to be read by the characteristic code reader, in such a way that a member account is created in said server, while a shop account is created in the shop unit.

10. The electronic transaction and logistics system according to Claim 9, wherein if a member is determined by a shop platform as a first payment at said shop, a shop account is created in said shop platform according to said member code and characteristic code.

11. The electronic transaction and logistics system according to Claim 9 or 10, wherein said member code is selectively one of a national identity number, a passport number, a phone number, a mobile phone number, an e-mail address, a business registration number, a user defined account, a specific account, a bar code or the combination thereof.

12. The electronic transaction and logistics system according to Claim 9, 10 or 11, wherein the passwords of said member account and said shop account are sent to the member by means of one of short message, e-mail, post, printing, sound and the combination thereof selectively by said server and said shop platform, when said member account and said shop account are created.

13. The electronic transaction and logistics system according to any one of Claims 9 to 12, wherein the member is requested by said server and said shop platform to input and then confirm the passwords of said member account and said shop account via said keyboard, when said member account and said shop account are created respectively.

14. The electronic transaction and logistics system according to any one of the preceding Claims, wherein said characteristic code carrier can be any one of an IC card, a radio frequency identification (RFID) card, a RFID tag, a bar code, a two-dimensional bar code, a quick response code, a magnetic stripe card, an identification card, a health insurance card, an Easycard, an iCash card, a Taiwan Smart Card, an All-in-One Card, a credit card, a debit card, a cash card, a traffic card, an Octopus card or a member card or a combination thereof and/or said characteristic code reader is can be any one of an IC card reader, a RFID tag reader, a bar code reader, a two-dimensional bar code reader, a quick response code reader, a magnetic stripe card reader or the combination thereof.

15. The electronic transaction and logistics system according to any one of the preceding Claims, wherein each member can log onto the server through said network for account management, consumption inquiry, and changing or stopping the characteristic code carrier and/or
change the characteristic code carrier by inputting said member code and password at said counter device and/or
conduct payment by logging into each shop platform through said network, and pick up merchandise at each logistics station in accordance with corresponding specific pick-up points after the characteristic code in said characteristic code carrier is read by said characteristic code reader and the password is input via said keyboard.
